**Europäisches Patentamt**

**European Patent Office**

**Office européen des brevets**

(11) Veröffentlichungsnummer: **0 270 864 B1**

(12) # EUROPÄISCHE PATENTSCHRIFT

(45) Veröffentlichungstag der Patentschrift: **09.10.91**

(51) Int. Cl.⁵: **B29C 65/54**, F16L 9/22, F02M 35/10

(21) Anmeldenummer: **87116653.4**

(22) Anmeldetag: **11.11.87**

(54) **Ansaugkrümmer eines Verbrennungsmotors.**

(30) Priorität: **15.11.86 DE 3639219**

(43) Veröffentlichungstag der Anmeldung:
**15.06.88 Patentblatt 88/24**

(45) Bekanntmachung des Hinweises auf die
Patenterteilung:
**09.10.91 Patentblatt 91/41**

(84) Benannte Vertragsstaaten:
**AT BE CH DE ES FR GB GR IT LI LU NL SE**

(56) Entgegenhaltungen:
**EP-A- 0 121 207      EP-A- 0 158 046
DE-A- 1 604 736      DE-B- 1 286 739
FR-A- 2 220 572      GB-A- 1 495 001**

**PATENT ABSTRACTS OF JAPAN, Band 9, Nr.
176 (M-398)[1899], 20. Juli 1985; & JP-A-60 45
771 (THREE BOND K.K.) 12-03-1985**

(73) Patentinhaber: **Joh, Günter
Kapellenweg 14
W-6460 Gelnhausen(DE)**

Patentinhaber: **Sedlmayr, Wilhelm
An der Hammerhalde 15
W-7730 VS-Villingen(DE)**

(72) Erfinder: **Joh, Günter
Kapellenweg 14
W-6460 Gelnhausen(DE)**
Erfinder: **Sedlmayr, Wilhelm
An der Hammerhalde 15
W-7730 VS-Villingen(DE)**

(74) Vertreter: **Knoblauch, Ulrich, Dr.-Ing.
Kühhornshofweg 10
W-6000 Frankfurt am Main 1(DE)**

## Beschreibung

Die Erfindung bezieht sich auf einen Ansaugkrümmer eines Verbrennungsmotors, aus wenigstens zwei miteinander verbundenen, den Hohlraum des Ansaugkrümmers begrenzenden geformten Druckgußstücken aus Metall.

Es ist bekannt, kompliziert geformte Ansaugkrümmer von Verbrennungsmotoren im Kokillenguß-Sandkern-Verfahren herzustellen. Dieses Verfahren ist wegen der Zerstörung des Sandkerns kostspielig und ergibt keine hinreichend glatten Innenflächen, wie sie bei Ansaugkrümmern zur Erzielung einer wirbelfreien Ansaugluft erwünscht sind.

Sodann sind gattungsgemäße Ansaugkrümmer bekannt, bei denen Druckgußstücke aus Metall, insbesondere Aluminium, in Dauerformen abgegossen und nach dem Erstarren miteinander verschweißt werden. Auf diese Weise lassen sich zwar glatte Innenflächen erzielen, doch ist das Schweißen aufwendig.

Die DE-A-1 604 736 beschreibt einen Hohlkörper aus wenigstens zwei miteinander verbundenen, den Hohlraum des Hohlkörpers begrenzenden geformten Stücken, die durch ein ausvulkanisierbares Elastomer lösbar verbunden sind. Bei einem Ansaugkrummer ist eine lösbare Verbindung jedoch nicht erwünscht.

Der Erfindung liegt die Aufgabe zugrunde, einen Ansaugkrümmer der gattungsgemäßen Art anzugeben, bei dem die geformten Stücke auf einfachere Weise, aber dennoch zuverlässig miteinander verbunden werden.

Erfindungsgemäß ist diese Aufgabe dadurch gelöst, daß die geformten Druckgußstücke durch ein ausvulkanisierbares Elastomer unter Zwischenschaltung wenigstens eines mit dem Elastomer vernetzenden Haftvermittlers verbunden sind.

Diese Art der Verbindung läßt sich sehr rasch maschinell herstellen und ist daher besonders für die Serienfertigung geeignet. Trotz oder gerade wegen ihrer Elastizität ist die Verbindung bei Ansaugkrümmern, die erheblichen Erschütterungen ausgesetzt sind, sehr haltbar und zuverlässig. Die Elastizität der Verbindung sorgt gleichzeitig für eine Dämpfung von Schall-Resonanzschwingungen im Körperhohlraum.

Vorzugsweise sind die geformten Stücke an ihren Verbindungsflächen profiliert. Dies führt zu einer Vergrößerung der Oberflächen und damit zu einer besseren Haftwirkung.

Obwohl die Verbindungsflächen ineinandergreifen können, wird vorgezogen, daß die Profilierung aus sich zu einem Hohlraum ergänzenden Vertiefungen in den Verbindungsflächen der geformten Stücke gebildet ist. In diesen Hohlraum kann das Elastomer in erwärmtem Zustand leicht eingespritzt werden.

Sodann kann dafür gesorgt sein, daß die Verbindungsflächen der geformten Stücke in einem Bereich zwischen dem Elastomer und dem Hohlraum des Ansaugkrümmers nach Art einer Feder-Nut-Verbindung ineinandergreifen. Auf diese Weise wird ein Materialaustritt von der Verbindungsstelle in den Hohlraum verhindert, was den Vorteil hat, daß die Verbrennung im Verbrennungsmotor durch abgelöstes und angesaugtes Elastomer nicht beeinträchtigt wird.

Die Erfindung und ihre Weiterbildungen werden nachstehend anhand der Zeichnung eines bevorzugten Ausführungsbeispiels näher beschrieben. Es zeigen:

Fig. 1    eine Seitenansicht mehrerer Ansaugkrümmer eines Verbrennungsmotors,

Fig. 2    den Schnitt II-II der Fig. 1,

Fig. 3    den Schnitt III-III der Fig. 1 und

Fig. 4    den vergrößerten Kreisausschnitt der Fig. 2.

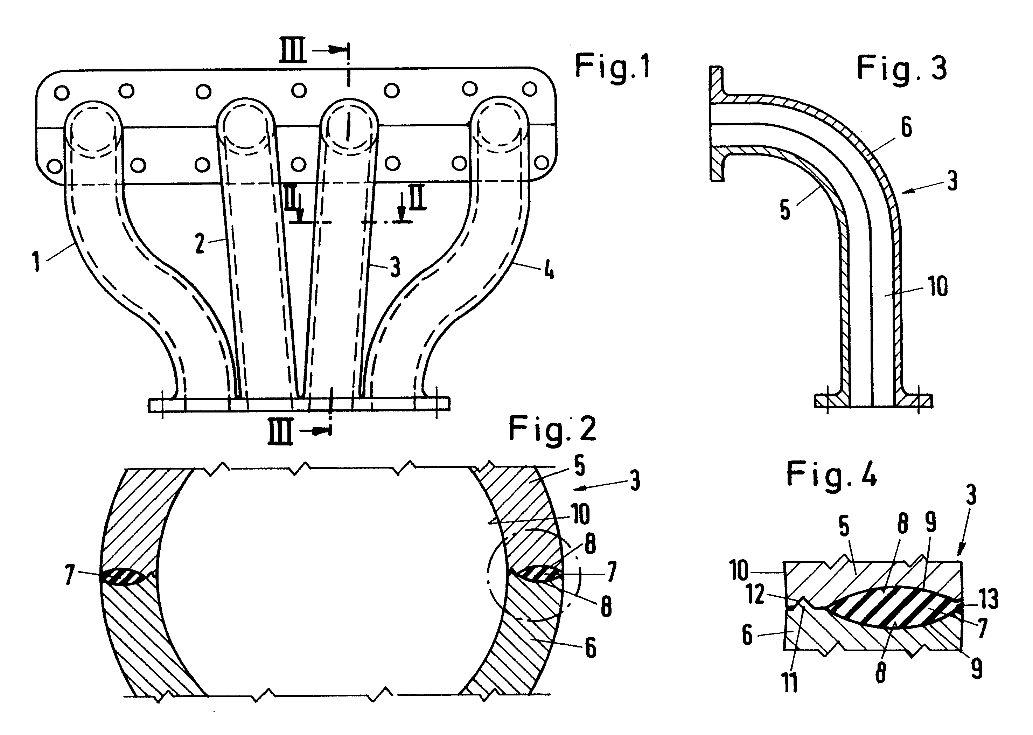

Fig. 1 zeigt als Beispiel vier erfindungsgemäße Ansaugkrümmer 1, 2, 3 und 4, die alle die Form eines verhältnismäßig kompliziert gekrümmten Rohres mit prinzipiell dem gleichen Aufbau aufweisen, der nachstehend anhand des Ansaugkrümmers 3 unter Bezugnahme auf die Fig. 2 und 4 näher beschrieben wird.

Der Ansaugkrümmer 3 besteht aus zwei im Druckgießverfahren hergestellten Druckgußstücken 5 und 6 aus Aluminium, die durch ein ausvulkanisierbares Elastomer 7 unter Zwischenschaltung eines Haftvermittlers 8 verbunden sind. Bei dem Haftvermittler handelt es sich um ein Silan (Silizium-Kohlenwasserstoff).

Die Druckgußstücke 5 und 6 sind in ihren Verbindungsflächen mit sich zu einem Hohlraum ergänzenden Vertiefungen 9 in Form flacher Nuten versehen und greifen in einem Bereich zwischen dem Elastomer 7 und dem Hohlraum 10 des Ansaugkrümmers 3 mit einer keilförmigen Rippe 11 und einer Nut 12 nach Art einer Feder-Nut-Verbindung ineinander. Die Feder-Nut-Verbindung 11, 12 verhindert, daß überschüssiges Elastomer beim Einbringen in die Vertiefungen 9 im viskosen Zustand in den Innenraum 10 des Ansaugkrümmers 3 gelangt.

Zur Ausbildung der Verbindung zwischen den Gußstücken 5 und 6 wird zunächst der Haftvermittler 8 nach einer Aktivierung der Verbindungsflächen in Xylol gelöst und als dünner Film in den Nuten 9 aufgetragen. Danach wird das Lösungsmittel Xylol abgedampft, so daß sich eine dünne Harzschicht in den Nuten 9 ergibt. Sodann werden die Gußstücke 5 und 6 mit ihren Verbindungsflächen zur Anlage gebracht, wobei ein enger Spalt 13 auf der Außenseite der Verbindungsfuge verbleibt. Durch diesen Spalt wird durch Erwärmung auf etwa 110°C viskos gemachte Silicon-Gummi-Masse in den Hohlraum zwischen den Nuten 9 eingespritzt und danach auf etwa 250°C erwärmt. Dabei vernetzen der Haftvermittler 8 und das Elastomer 7, so daß sich nach Abkühlung des Elastomers 7 eine feste Verbindung zwischen dem Elastomer 7 und den Gußstücken 5 und 6 ergibt.

Diese Verbindung ist verhältnismäßig hoch belastbar und dämpft aufgrund ihrer Elastizität gleichzeitig Schall-Resonanzschwingungen im Hohlraum 10 zwischen den Gußstücken 5 und 6.

Im Gegensatz zu einer starren Klebeverbindung der Gußstücke 5 und 6 ist eine elastische Verbindung dauerhafter bei Beanspruchung durch Erschütterungen.

Anstelle von Silicon-Gummi können auch andere Gummiarten als Elastomer 7 verwendet werden, z.B. Nitril-Gummi oder Polyacrylat-Gummi. Je nach Gummisorte und Art des Metalls der zu verbindenden Gußstücke können auch zwei verschiedene Haftvermittler übereinander verwendet werden, von denen der eine die Verbindung zum Metall und der andere die Verbindung zum Elastomer herstellt.

Sodann können die Verbindungsflächen der Gußstücke auf andere Weise als dargestellt profiliert werden, z.B. in der Weise, daß eine Nut in der einen Verbindungsfläche und eine in diese Nut eingreifende Rippe auf der anderen Verbindungsfläche unter Freilassung eines Spalts zwischen den Verbindungsflächen für das einzubringende Elastomer vorgesehen wird.

## Patentansprüche

1. Ansaugkrümmer eines Verbrennungsmotors, aus wenigstens zwei miteinander verbundenen, den Hohlraum (10) des Ansaugkrümmers (1; 2; 3; 4) begrenzenden geformten Druckgußstücken (5, 6) aus Metall, **dadurch gekennzeichnet,** daß die geformten Druckgußstücke (5, 6) durch ein ausvulkanisierbares Elastomer (7) unter Zwischenschaltung wenigstens eines mit dem Elastomer (7) vernetzenden Haftvermittlers (8) verbunden sind.

2. Ansaugkrümmer nach Anspruch 1, dadurch gekennzeichnet, daß die geformten Druckgußstücke (5, 6) an ihren Verbindungsflächen profiliert sind.

3. Ansaugkrümmer nach Anspruch 2, dadurch gekennzeichnet, daß die Profilierung aus sich zu einem Hohlraum ergänzenden Vertiefungen (9) in den Verbindungsflächen der geformten Druckgußstücke (5, 6) gebildet ist.

4. Ansaugkrümmer nach einem der Ansprüche 1 bis 3, dadurch gekennzeichnet, daß die Verbindungsflächen der geformten Druckgußstücke (5, 6) in einem Bereich zwischen dem Elastomer (7) und dem Hohlraum (10) des Ansaugkrümmers (3) nach Art einer Feder-Nut-Verbindung (11, 12) ineinandergreifen.

## Claims

1. Intake manifold for an internal combustion engine, consisting of two or more shaped metal diecastings (5, 6) joined together and defining the cavity (10) of the intake manifold (1; 2; 3; 4), characterised in that the shaped diecastings (5, 6) are joined by a fully vulcanisable elastomer (7) with the interposition of at least one bonding agent (8) crosslinking with the elastomer (7).

2. Intake manifold according to claim 1, characterised in that the shaped diecast parts (5, 6) are profiled at their joint surfaces.

3. Intake manifold according to claim 2, characterised in that the profiling is formed from recesses (9) in the joint surfaces of the shaped diecastings (5, 6), which recesses (9) complement each other to form a cavity.

4. Intake manifold according to any of claims 1 to 3, characterised in that the joint surfaces of the shaped diecastings (5, 6) interlock after the fashion of a keyed joint (11, 12) in a region between the elastomer (7) and the cavity (10) of the intake manifold (3).

## Revendications

1. Collecteur d'admission pour moteur à combustion interne, constitué par au moins deux pièces façonnées coulées sous pression (5, 6) en métal, reliées l'une à l'autre et limitant l'espace interne creux (10) du collecteur d'admission (1; 2; 3; 4), caractérisé en ce que les pièces façonnées coulées sous pression (5, 6) sont reliées par un élastomère (7) pouvant être totalement vulcanisé, avec interposition d'au moins un agent de pontage (8) qui se réticule avec l'élastomère (7).

2. Collecteur d'admission selon la revendication 1, caractérisé en ce que les pièces façonnées coulées sous pression (5, 6) sont profilées sur leurs surfaces de liaison.

3. Collecteur d'admission selon la revendication 1, caractérisé en ce que le profilage est constitué par des cavités (9) qui se complètent pour former un espace creux dans les surfaces de liaison des pièces façonnées coulées sous pression (5, 6).

4. Collecteur d'admission selon l'une quelconque des revendications 1 à 3, caractérisé en ce que les surfaces de liaison des pièces façonnées coulées sous pression (5, 6) pénètrent l'une dans l'autre dans une région située entre l'élastomère (7) et l'espace interne creux (10) du collecteur d'admission (3) à la manière d'une liaison par languette et rainure (11, 12).

Fig.1

Fig. 3

Fig.2

Fig. 4